# DEMANDE DE BREVET EUROPEEN

(11) **EP 2 161 161 A2**
(43) Date de publication de la demande: **10.03.2010**
(21) Numéro de dépôt: 09290684.1
(22) Date de dépôt: 08.09.2009
(51) Int. Cl.: B60N 2/70

(54) **Procédé de réalisation d'une pièce de matelassage d'un siège de véhicule automobile**

(30) Priorité: 09.09.2008 FR 0804965
(71) Demandeur: Centre d'Etude et de Recherche pour l'Automobile (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un procédé de réalisation d'une pièce comprenant un corps en mousse souple revêtu d'une coiffe, ledit procédé étant caractérisé en ce qu'il comprend les étapes de :
● prévoir un textile comprenant des fibres thermoplastiques,
● réaliser une fusion superficielle de la face d'envers dudit textile,
● découper au moins un format dans ledit textile,
● confectionner une coiffe avec ledit format,
● disposer ladite coiffe dans un moule,
● injecter dans ladite coiffe un mélange précurseur de mousse souple,
● après expansion de la mousse, démouler la pièce obtenue.

## Description

L'invention concerne un procédé de réalisation d'une pièce comprenant un corps en mousse souple revêtu d'une coiffe et une pièce de matelassage d'un siège de véhicule automobile réalisée par un tel procédé.

Il est connu de mettre en oeuvre un procédé de réalisation d'une pièce comprenant un corps en mousse souple revêtu d'une coiffe, ledit procédé comprenant les étapes de :
- prévoir un textile dont l'envers est associé à une couche d'étanchéité à la mousse,
- découper au moins un format dans ledit textile,
- confectionner une coiffe avec ledit format,
- disposer ladite coiffe dans un moule,
- injecter dans ladite coiffe un mélange précurseur de mousse souple,
- après expansion de la mousse, démouler la pièce obtenue.

Le fait de mettre une couche d'étanchéité à la mousse en envers du textile, ladite couche étant destinée à empêcher un passage de la mousse vers la face d'aspect du textile, entraîne une complexité de réalisation et des coûts de fabrication importants.

L'invention a pour but de pallier ces inconvénients.

A cet effet, et selon un premier aspect, l'invention propose un procédé de réalisation d'une pièce comprenant un corps en mousse souple revêtu d'une coiffe, ledit procédé comprenant les étapes de :
- prévoir un textile comprenant des fibres thermoplastiques,
- réaliser une fusion superficielle de la face d'envers dudit textile,
- découper au moins un format dans ledit textile,
- confectionner une coiffe avec ledit format,
- disposer ladite coiffe dans un moule,
- injecter dans ladite coiffe un mélange précurseur de mousse souple,
- après expansion de la mousse, démouler la pièce obtenue.

La fusion superficielle - c'est à dire sur une portion d'épaisseur du textile - de la face d'envers du textile permet de réaliser une barrière d'étanchéité à la mousse.

Par « mousse souple », on entend une mousse élastiquement compressible telle qu'utilisée pour réaliser un rembourrage de siège.

Selon un deuxième aspect, l'invention propose une pièce de mateiassage d'un siège de véhicule automobile réalisée par un tel procédé.

D'autres particularités et avantages de l'invention apparaîtront dans la description qui suit.

On décrit un procédé de réalisation d'une pièce comprenant un corps en mousse souple revêtu d'une coiffe, ledit procédé comprenant les étapes de :
- prévoir un textile comprenant des fibres thermoplastiques,
- réaliser une fusion superficielle de la face d'envers dudit textile, de sorte à créer une barrière d'étanchéité au mélange précurseur de mousse et à la mousse et à rendre ainsi le textile étanche à la mousse,
- découper au moins un format dans ledit textile,
- confectionner - notamment par couture - une coiffe avec ledit format,
- disposer ladite coiffe dans un moule,
- injecter dans ladite coiffe un mélange précurseur de mousse - notamment de polyuréthanne - souple,
- après expansion de la mousse, démouler la pièce obtenue.

Selon une réalisation, la fusion de la face d'envers est réalisée par un cylindre chauffé disposé en regard de ladite face, ledit cylindre étant porté sensiblement à la température de fusion des fibres thermoplastiques, le textile étant actionné en défilement contre ledit cylindre, avec l'utilisation éventuelle de cylindres annexes de guidage.

Plus particulièrement, le textile peut être actionné en défilement en compression entre le cylindre chauffé et un cylindre de guidage non chauffé, ceci permettant d'obtenir une étanchéité optimisée à la mousse.

Selon une réalisation, la face d'envers du textile est abrasée préalablement à sa fusion. Cet apprêt mécanique a pour but de conférer au textile une surface duveteuse ou suédée. Le principe est de faire affleurer à la surface de l'étoffe des fibrilles. Les fibrilles ainsi créées sur la face envers du textile seront plus facilement fusionnées et vont donc favoriser la création de la barrière d'étanchéité.

L'abrasion peut être réalisée par grattage qui consiste à faire passer le textile sur une laineuse qui possède des rouleaux garnis d'aiguilles métalliques recourbées. Par leur vitesse de rotation et leur agencement alterné sur un tambour rotatif, ces aiguilles grattent successivement le tissu dans le sens du poil et à contre-poil.

En variante, l'abrasion peut être réalisée par émerisage qui consiste à exposer le tissu à l'action de cylindres recouverts de papier émeri. L'émerisage est pratiquement similaire au grattage mais son effet est moins marqué.

Le procédé décrit ci-dessus s'applique en particulier à la réalisation d'une pièce de matelassage d'un siège de véhicule automobile telle qu'un coussin d'assise ou de dossier, un appui-tête ou un accoudoir.

## Revendications

1. Procédé de réalisation d'une pièce comprenant un corps en mousse souple revêtu d'une coiffe, ledit procédé étant **caractérisé en ce qu'**il comprend les étapes de :
• prévoir un textile comprenant des fibres thermoplastiques,
• réaliser une fusion superficielle de la face d'envers dudit textile,
• découper au moins un format dans ledit textile,
• confectionner une coiffe avec ledit format,
• disposer ladite coiffe dans un moule,
• injecter dans ladite coiffe un mélange précurseur de mousse souple,
• après expansion de la mousse, démouler la pièce obtenue.

2. Procédé selon la revendication 1, **caractérisé en ce que** la fusion de la face d'envers est réalisée par un cylindre chauffé disposé en regard de ladite face, ledit cylindre étant porté sensiblement à la température de fusion des fibres thermoplastiques, le textile étant actionné en défilement contre ledit cylindre.

3. Procédé selon la revendication 2, **caractérisé en ce que** le textile est actionné en défilement en compression entre le cylindre chauffé et un cylindre non chauffé.

4. Procédé selon l'une quelconque des revendications 1 à 3, **caractérisé en ce que** la face d'envers du textile est abrasée préalablement à sa fusion.

5. Procédé selon la revendication 4, **caractérisé en ce que** l'abrasion est réalisée par grattage.

6. Procédé selon la revendication 4, **caractérisé en ce que** l'abrasion est réalisée par émerisage.

7. Pièce de matelassage d'un siège de véhicule automobile réalisée par un procédé selon l'une quelconque des revendications 1 à 6.
